(19) Europäisches Patentamt
European Patent Office
Office européen des brevets

(11) Veröffentlichungsnummer: **0 417 558 A2**

# (12) EUROPÄISCHE PATENTANMELDUNG

(21) Anmeldenummer: **90116628.0**

(22) Anmeldetag: **30.08.90**

(51) Int. Cl.[5]: **C07F 9/17**, C07F 9/24, C07F 9/40, C07F 9/44, A01N 57/04

(30) Priorität: **12.09.89 DE 3930409**

(43) Veröffentlichungstag der Anmeldung: **20.03.91 Patentblatt 91/12**

(84) Benannte Vertragsstaaten: **BE CH DE FR GB IT LI NL**

(71) Anmelder: **BAYER AG**

**W-5090 Leverkusen 1 Bayerwerk(DE)**

(72) Erfinder: **Sommer, Herbert, Dr.**
**Neuenkamper Strasse 32 a**
**W-5650 Solingen 1(DE)**
Erfinder: **Böhm, Stefan, Dr.**
**Carl-Leverkus-Strasse 30**
**W-5090 Leverkusen 1(DE)**
Erfinder: **Bielefeldt, Dietmar, Dr.**
**Beuthener Strasse 13**
**W-4030 Ratingen 6(DE)**
Erfinder: **Hartwig, Jürgen, Dr.**
**Franz-Esser-Strasse 44**
**W-5090 Leverkusen 3(DE)**
Erfinder: **Stendel, Wilhelm, Dr.**
**In den Birken 55**
**W-5600 Wuppertal 1(DE)**

## (54) S-Halogenalkyl(di)(tri)(thio)phosphor(phosphon)säure(amid)-ester.

(57) Die Erfindung betrifft neue S-Halogen(di)(tri)(thio)phosphor(phosphon)säure(amid)ester der allgemeinen Formel

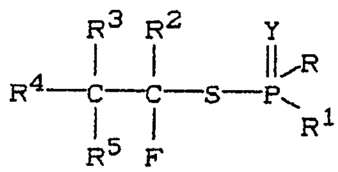

(I)

in welcher
R für gegebenenfalls substituiertes Alkyl oder Alkenyl oder für einen Rest $-OR^6$ steht, worin $R^6$ für jeweils gegebenenfalls substituiertes Alkyl, Alkenyl oder Alkinyl steht,
$R^1$ für einen Rest $-SR^7$ oder einen Rest

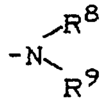

steht, worin
$R^7$ für jeweils gegebenenfalls substituiertes Alkyl, Cycloalkyl, Alkenyl oder Alkinyl steht und
$R^8$ und $R^9$ gleich oder verschieden sind unabhängig voneinander für Wasserstoff oder für gegebenenfalls substituierte Reste aus der Reihe Alkyl, Cycloalkyl, Alkenyl oder Alkinyl stehen oder
gemeinsam mit dem Stickstoffatom, an welches sie gebunden sind einen fünf- bis siebengliedrigen, gesättigten oder ungesättigten Ring bilden,



Xerox Copy Centre

$R^2$, $R^3$, $R^4$ und $R^5$ unabhängig voneinander für Wasserstoff, Halogen oder Alkyl stehen und
Y für Sauerstoff oder Schwefel steht,
welche als Schädlingsbekämpfungsmittel verwendet werden können.

## S-HALOGENALKYL(DI)(TRI)(THIO)PHOSPHOR(PHOSPHON)SÄURE(AMID)-ESTER

Die Erfindung betrifft neue S-Halogenalkyl(di)(tri)-(thio)phosphor(phosphon)säure(amid)ester, Verfahren zu ihrer Herstellung und ihre Verwendung als Schädlingsbekämpfungsmittel, insbesondere als Insektizide.

Es ist bereits bekannt, daß bestimmte Thionophosphor(phosphon)säure(amid)ester, wie zum Beispiel O-Methyl-O-(2-chlor-1-fluor-ethyl)-thionophosphorsäurediesteramid, pestizid wirksam sind (vgl. DE-OS 26 29 016, entsprechend US-PS 4 159 324). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellend.

Es wurden nun neue S-Halogenalkyl(di)(tri)(thio)phosphor(phosphon)säure(amid)ester der allgemeinen Formel

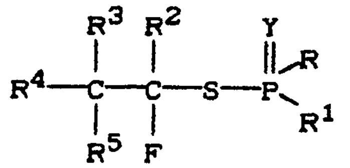

(I)

gefunden,
in welcher
R für gegebenenfalls substituiertes Alkyl oder Alkenyl oder für einen Rest $-OR^6$ steht, worin
$R^6$ für jeweils gegebenenfalls substituiertes Alkyl, Alkenyl oder Alkinyl steht,
$R^1$ für einen Rest $-SR^7$ oder einen Rest

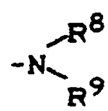

steht,
worin
$R^7$ für jeweils gegebenenfalls substituiertes Alkyl, Cycloalkyl, Alkenyl oder Alkinyl steht und
$R^8$ und $R^9$ gleich oder verschieden sind und unabhängig voneinander für Wasserstoff oder für gegebenenfalls substituierte Reste aus der Reihe Alkyl, Cycloalkyl, Alkenyl oder Alkinyl stehen oder gemeinsam mit dem Stickstoffatom, an welches sie gebunden sind einen fünf- bis siebengliedrigen, gesättigten oder ungesättigten Ring bilden,
$R^2$, $R^3$, $R^4$ und $R^5$ unabhängig voneinander für Wasserstoff, Halogen oder Alkyl stehen und
Y für Sauerstoff oder Schwefel steht.

Die Verbindungen der Formel (I) besitzen gegebenenfalls ein asymmetrisch substituiertes Phosphoratom und/oder Reste mit einem oder mehreren Asymmetrie-Zentren. Sie können daher in verschiedenen optischen Isomerenformen vorliegen, die in unterschiedlichen Mengenverhältnissen anfallen können. In allen Fällen liegen sie vorwiegend als Racemate vor. Die Erfindung betrifft sowohl die Isomerengemische als auch die einzelnen Isomeren.

Im folgenden wird der Einfachheit halber jedoch stets von Verbindungen der Formel (I) gesprochen, obwohl sowohl die reinen Verbindungen als auch die Gemische mit unterschiedlichen Anteilen an enantiomeren und diastereomeren Verbindungen gemeint sind.

Weiterhin wurde gefunden, daß man die neuen S-Halogenalkyl(di)(tri)(thio)phosphor(phosphon)säure-(amid)ester der Formel (I) erhält,
wenn man

A) (Thio)phosphorig(phosphonig)säure(amid)ester der allgemeinen Formel (II)

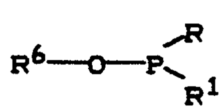

(II)

in welcher
R, $R^1$ und $R^5$ die oben angegebene Bedeutung haben, entweder

a) mit 1-Fluoralkylsulfenylhalogeniden der Formel (III)

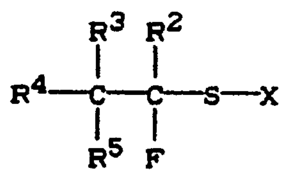

(III)

in welcher
$R^2$ $R^3$, $R^4$ und $R^5$ die oben angegebene Bedeutung haben und
X für Halogen, insbesondere Chlor, steht,
oder

b) mit Bis(1-Fluoralkyl)disulfanen der Formel (IV)

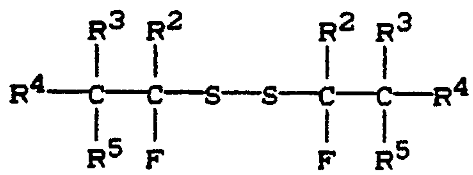

(IV)

in welcher
$R^2$, $R^3$, $R^4$ und $R^5$ die oben angegebene Bedeutung haben,
gegebenenfalls in Gegenwart eines Verdünnungsmittels umsetzt,
oder

B) 1-Fluoralkylsulfenylhalogenide der Formel (III)

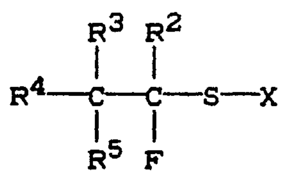

(III)

in welcher
$R^2$, $R^3$, $R^4$, $R^5$ und X die oben angegebene Bedeutung haben,
mit (Thio)phosphorig(phosphonig)säure(amid)esterhalogeniden der Formel (V)

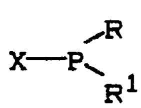

(V)

in welcher
R, $R^1$ und X die oben angegebene Bedeutung haben,
gegebenenfalls in Gegenwart eines Verdünnungsmittels und gegebenenfalls in Gegenwart eines Reaktionshilfsmittels umsetzt,
oder

C) zur Herstellung der Verbindungen der Formel I, in welcher Y für Schwefel, R für $OR^6$ und $R^1$ für $SR^7$ stehen,
Fluoralkene der Formel (VI)

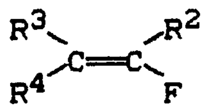

(VI)

in welcher
$R^2$, $R^3$ und $R^4$ die oben angegebene Bedeutung haben,
mit Thiolen der Formel (VII),
H-S-$R^7$ (VII)
in welcher
$R^7$ die oben angegebene Bedeutung hat,
und mit Alkoholen der Formel (VIII),
H-O-$R^6$ (VIII)
in welcher
$R^6$ die oben angegebene Bedeutung hat,
und mit Phosphor(V)sulfid ($P_4S_{10}$) gegebenenfalls in Gegenwart eines Verdünnungsmittels umsetzt, und gegebenenfalls die gemäß (A) und (B) erhaltenen Verbindungen der Formel (I),
in welcher
Y für Sauerstoff steht,
durch Umsetzung mit einem Schwefelungsreagenz, wie beispielsweise 2,4-Bis-(4-methoxyphenyl)-2,4-dithioxo-1,3,2,4-dithiadiphosphetan (Lawesson's Reagenz), in die entsprechenden Verbindungen, in welchen Y für Schwefel steht, überführt.

Die neuen S-Halogenalkyl(di)(tri)(thio)phosphor(phosphon)säure(amid)ester der Formel (I) zeichnen sich durch eine besonders hohe Wirksamkeit als Schädlingsbekämpfungsmittel, insbesondere als Insektizide aus.

Die erfindungsgemäßen Stoffe stellen somit eine wertvolle Bereicherung der Technik dar.

Für den Begriff Alkyl oder gegebenenfalls substituiertes Alkyl in der Definition von R, $R^2$, $R^3$, $R^4$, $R^5$, $R^6$, $R^7$, $R^8$ und $R^9$ in den allgemeinen Formeln, steht geradkettiges oder verzweigtes Alkyl mit vorzugsweise 1 bis 20, besonders bevorzugt 1 bis 12, insbesondere 1 bis 6 und ganz besonders bevorzugt 1 bis 4 Kohlenstoffatomen. Beispielhaft seien gegebenenfalls substituiertes Methyl, Ethyl, n-Propyl, i-Propyl, n-Butyl, sec-Butyl, i-Butyl, tert-Butyl, n-Pentyl, i-Pentyl und tert-Pentyl genannt.

Für den Begriff Alkenyl oder gegebenenfalls substituiertes Alkenyl in den Definitionen von R, $R^6$, $R^7$, $R^8$ und $R^9$ in den allgemeinen Formeln steht geradkettiges oder verzweigtes Alkenyl mit vorzugsweise 2 bis 8, besonders bevorzugt 2 bis 6 und ganz besonders bevorzugt 2 bis 4 Kohlenstoffatomen. Beispielhaft seien gegebenenfalls substituiertes Vinyl, Allyl, 2-Butenyl, 3-Butenyl und 1-Methylallyl genannt.

Unter dem Begriff gegebenenfalls substituiertes Alkinyl in den Definitionen von $R^6$, $R^7$, $R^8$ und $R^9$ in den allgemeinen Formeln ist geradkettiges oder verzweigtes Alkinyl mit vorzugsweise 2 bis 6 und besonders bevorzugt 2 bis 4 Kohlenstoffatomen zu verstehen. Beispielhaft seien gegebenenfalls substituiertes Ethinyl, 2-Propinyl, 2-Butinyl, 3-Butinyl und 1-Methyl-2-propinyl genannt.

Als gegebenenfalls substituiertes Cycloalkyl in den Definitionen vcn $R^7$, $R^8$ und $R^9$ steht Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl und Cycloheptyl genannt.

Die in der Definition von R, $R^6$, $R^7$, $R^8$ und $R^9$ genannten substituierten Reste können einen oder mehrere, vorzugsweise 1 bis 3, insbesondere 1 oder 2 gleiche oder verschiedene Substituenten tragen. Als bevorzugte Substituenten für Alkyl, Alkenyl und Alkinyl seien aufgeführt: Alkoxy mit 1 bis 4 Kohlenstoffatomen, wie Methoxy, Ethoxy, n-Propoxy, i-Propoxy, n-Butoxy, i-Butoxy, sec-Butoxy, tert-Butoxy und Halogen.

Als bevorzugte Substituenten für Cycloalkyl seien aufgeführt:
Alkyl mit 1 bis 4 Kohlenstoffatomen, wie Methyl, Ethyl, n-Propyl, i-Propyl, n-Butyl, i-Butyl, sec-Butyl und tert-Butyl, Halogenalkyl, wie z. B. Trifluormethyl und Halogen.

Bevorzugt sind die Reste R, $R^6$, $R^7$, $R^8$ und $R^9$ unsubstituiert.

Halogen, in den Definitionen von $R^2$, $R^3$, $R^4$ und $R^5$ in den allgemeinen Formeln sowie als Substituenten für eine Gruppe und darüber hinaus, wo nicht speziell definiert, steht für Fluor, Chlor, Brom und Iod, insbesondere Fluor, Chlor und Brom. Halogen in der Definition von X bedeutet Chlor oder Brom, vorzugsweise Chlor.

Wenn $R^8$ und $R^9$ gemeinsam mit dem Stickstoffatom einen Ring bilden, enthält dieser 5 bis 7, vorzugsweise 5 oder 6 Ringglieder. Der Ring kann 1 bis 3 Doppelbindungen enthalten, vorzugsweise ist er jedoch gesättigt. Als besonders bevorzugte Ringe seien der Pyrrolidin- und der Piperidin-Ring genannt.

In den allgemeinen Formeln steht R vorzugsweise für $C_1$-$C_4$-Alkyl und für $C_1$-$C_4$-Alkoxy, insbesondere für Methyl, Ethyl, Methoxy und Ethoxy.

In den allgemeinen Formeln steht $R^1$ vorzugsweise für $C_1$-$C_4$-Alkylthio, insbesondere Methylthio, Ethylthio, n-Propylthio, i-Propylthio, n-Butylthio, s-Butylthio oder i-Butylthio oder für $C_1$-$C_4$-Alkylamino, insbesondere für i-Propylamino, Dimethylamino, Diethylamino und Di-isopropylamino.

In den allgemeinen Formeln steht $R^2$ vorzugsweise für Wasserstoff, Halogen oder $C_1$-$C_4$-Alkyl, insbesondere für Wasserstoff, Fluor, Chlor, Methyl oder Ethyl, besonders bevorzugt für Fluor.

In den allgemeinen Formeln steht $R^3$ vorzugsweise für Wasserstoff, Halogen oder $C_1$-$C_4$-Alkyl, insbesondere für Wasserstoff, Fluor, Chlor, Methyl oder Ethyl, besonders bevorzugt für Wasserstoff oder Fluor.

In den allgemeinen Formeln steht $R^4$ vorzugsweise für Wasserstoff oder Halogen, insbesondere für Wasserstoff, Fluor oder Chlor.

In den allgemeinen Formeln steht $R^5$ vorzugsweise für Wasserstoff oder Halogen, insbesondere für Wasserstoff, Fluor oder Chlor.

Die hier aufgeführten bevorzugten Definitionen gelten auch für die im folgenden aufgeführten bevorzugten Kombinationen der Definitionen in entsprechender Weise.

Von den erfindungsgemäßen S-Halogenalkyl(di)(tri)(thio)phosphor(phosphon)säure(amid)estern der Formel (I) sind diejenigen bevorzugt, in welchen

R für jeweils gegebenenfalls durch Halogen und/oder $C_1$-$C_4$ Alkoxy substituiertes Alkyl mit 1 bis 6 Kohlenstoffatomen oder Alkenyl mit 2 bis 6 Kohlenstoffatomen oder für einen Rest $-OR^6$ steht, worin

$R^6$ für jeweils gegebenenfalls durch Halogen und/oder $C_1$-$C_4$-Alkoxy substituiertes Alkyl mit 1 bis 6 Kohlenstoffatomen, Alkenyl mit 2 bis 6 Kohlenstoffatomen oder Alkinyl mit 2 bis 6 Kohlenstoffatomen steht,

$R^1$ für einen Rest $-SR^7$ oder einen Rest

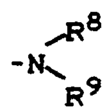

steht,

worin

$R^7$ für jeweils gegebenenfalls durch Halogen und/oder $C_1$-$C_4$-Alkoxy substituiertes Alkyl mit 1 bis 6 Kohlenstoffatomen, Alkenyl mit 2 bis 6 Kohlenstofatomen oder Alkinyl mit 2 bis 6 Kohlenstoffatomen oder für gegebenenfalls durch Methyl, Ethyl, Fluor und/oder Chlor substituiertes Cycloalkyl mit 3 bis 8 Kohlenstoffatomen steht und

$R^8$ und $R^9$ gleich oder verschieden sind und unabhän gig voneinander für Wasserstoff, für gegebenenfalls durch Halogen und/oder $C_1$-$C_4$-Alkoxy substituiertes Alkyl mit 1 bis 4 Kohlenstoffatomen; für gegebenenfalls durch Methyl, Ethyl, Fluor und/oder Chlor substituiertes Cycloalkyl mit 3 bis 8 Kohlenstoffatomen; für jeweils gegebenenfalls durch Halogen und/oder $C_1$-$C_4$-Alkoxy substituiertes Alkenyl mit 2 bis 6 Kohlenstoffatomen oder Alkinyl mit 2 bis 6 Kohlenstoffatomen stehen,

oder

gemeinsam mit dem Stickstoffatom, an welches sie gebunden sind einen 5- bis 6-gliedrigen, gesättigten oder ungesättigten Ring bilden,

$R^2$, $R^3$, $R^4$ und $R^5$ unabhängig voneinander für Wasserstoff, Fluor, Chlor, Brom oder Alkyl mit 1 bis 6 Kohlenstoffatomen stehen und

Y für Sauerstoff oder Schwefel steht.

Besonders bevorzugt sind diejenigen S-Halogenalkyl(di)(tri)(thio)phosphor(phosphon)säure(amid)ester der Formel (I),

in welchen

R für jeweils gegebenenfalls durch Fluor, Chlor, Methoxy und/oder Ethoxy substituiertes Alkyl mit 1 bis 4 Kohlenstoffatomen oder Alkenyl mit 2 bis 4 Kohlenstoffatomen oder für einen Rest $-OR^6$ steht, worin

$R^6$ für jeweils gegebenenfalls durch Fluor, Chlor, Methoxy und/oder Ethoxy substituiertes Alkyl mit 1 bis 4 Kohlenstoffatomen, Alkenyl mit 2 bis 4 Kohlenstoffatomen oder Alkinyl mit 2 bis 4 Kohlenstoffatomen steht,

$R^1$ für einen Rest $-SR^7$ oder einen Rest

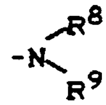

steht, worin
$R^7$ für jeweils gegebenenfalls durch Fluor, Chlor, Methoxy und/oder Ethoxy substituiertes Alkyl mit 1 bis 4 Kohlenstoffatomen, Alkenyl mit 2 bis 4 Kohlenstoffatomen, Alkinyl mit 2 bis 4 Kohlenstoffatomen oder für gegebenenfalls durch Methyl, Ethyl, Fluor und/oder Chlor substituiertes Cycloalkyl mit 3 bis 6 Kohlenstoffatomen steht und
$R^8$ und $R^9$ gleich oder verschieden sind und unabhängig voneinander für Wasserstoff, für gegebenenfalls durch Fluor, Chlor, Methoxy und/oder Ethoxy substituiertes Alkyl mit 1 bis 4 Kohlenstoffatomen; für gegebenenfalls durch Methyl, Ethyl, Fluor und/oder Chlor substituiertes Cycloalkyl mit 3 bis 6 Kohlenstoffatomen: für jeweils gegebenenfalls durch Fluor, Chlor, Methoxy und/oder Ethoxy substituiertes Alkenyl mit 2 bis 4 Kohlenstoffatomen oder Alkinyl mit 2 bis 4 Kohlenstoffatomen stehen, oder
gemeinsam mit dem Stickstoffatom, an welches sie gebunden sind für Piperidyl oder Pyrrolidinyl stehen,
$R^2$, $R^3$, $R^4$ und $R^5$ unabhängig voneinander für Wasserstoff, Fluor, Chlor, Brom oder Alkyl mit 1 bis 4 Kohlenstoffatomen stehen und
Y für Sauerstoff oder Schwefel steht.

Ganz besonders bevorzugt sind diejenigen S-Halogenalkyl(di)(tri)(thio)phosphor(phosphon)säure(amid)-ester der Formel (I),
in welchen
R für Methyl, Ethyl, n-Propyl, s-Propyl oder i-Propyl oder für einen Rest $-OR^6$ steht, worin
$R^6$ für Methyl, Ethyl, n-Propyl, i-Propyl oder Chlorethyl steht,
$R^1$ für einen Rest $-SR^7$ oder einen Rest

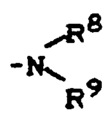

steht, worin
$R^7$ für Methyl, Ethyl, n-Propyl, i-Propyl, n-Butyl, s-Butyl, i-Butyl oder t-Butyl steht,
$R^8$ für Wasserstoff, Methyl, Ethyl, n-Propyl oder i-Propyl steht und
$R^9$ für Methyl, Ethyl, n- oder i-Propyl, i-Butyl oder s-Butyl oder Allyl steht,
$R^2$ für Wasserstoff, Fluor, Chlor, Methyl oder Ethyl,
$R^3$ für Wasserstoff, Fluor, Chlor, Methyl oder Ethyl,
$R^4$ für Wasserstoff, Fluor oder Chlor und
$R^5$ für Wasserstoff, Fluor oder Chlor steht und
Y für Sauerstoff oder Schwefel steht.

Die für die Verbindung der allgemeinen Formel (I) angegebenen allgemeinen und bevorzugten Restedefinitionen gelten auch für die Verbindungen der übrigen allgemeinen Formeln (Zwischen- bzw. Vorprodukte) entsprechend.

Verwendet man als Ausgangsstoffe beispielsweise S-s-Butyl-O,O-diethyl-thiophosphorigsäuretriester und 1,1-Difluorethylsulfenylchlorid, so läßt sich der Reaktionsablauf der erfindungsgemäßen Verfahrens Variante (A)/(a) durch das folgende Formelschema darstellen:

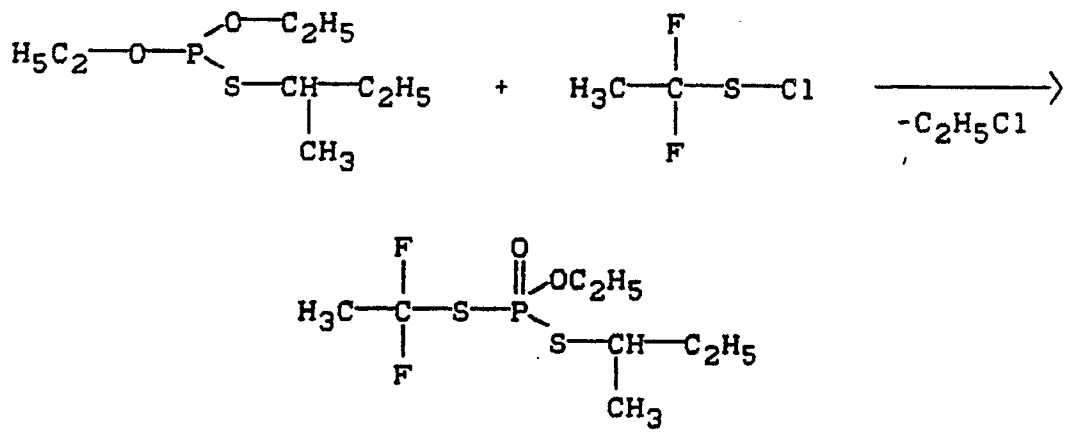


Für die Variante (b) des erfindungsgemäßen Verfahrens (A) läßt sich der Reaktionsablauf wie folgt darstellen, wenn man als Ausgangsstoffe beispielsweise Bis(2,2-dichlor-1,1,2-trifluor-ethan)disulfan und Phosphorigsäurediethyldiester-N,N-dimethylamid verwendet:

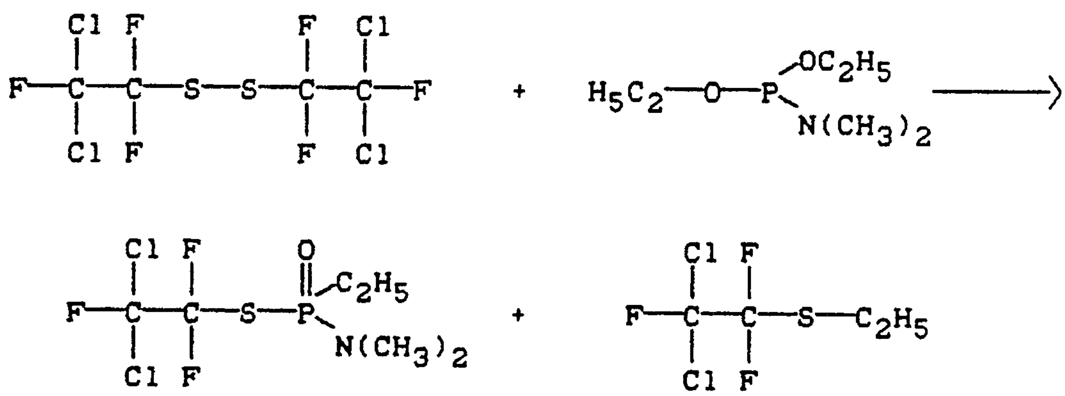

Verwendet man als Ausgangsstoffe beispielsweise Phosphorigsäuremethylester-N,N-diisopropylamid-chlorid und 2,2-Dichlor-1,1,2-trifluorethansulfenylchlorid, so läßt sich der Reaktionsablauf der erfindungsgemäßen Verfahrensvariante (B) durch das folgende Formelschema darstellen:

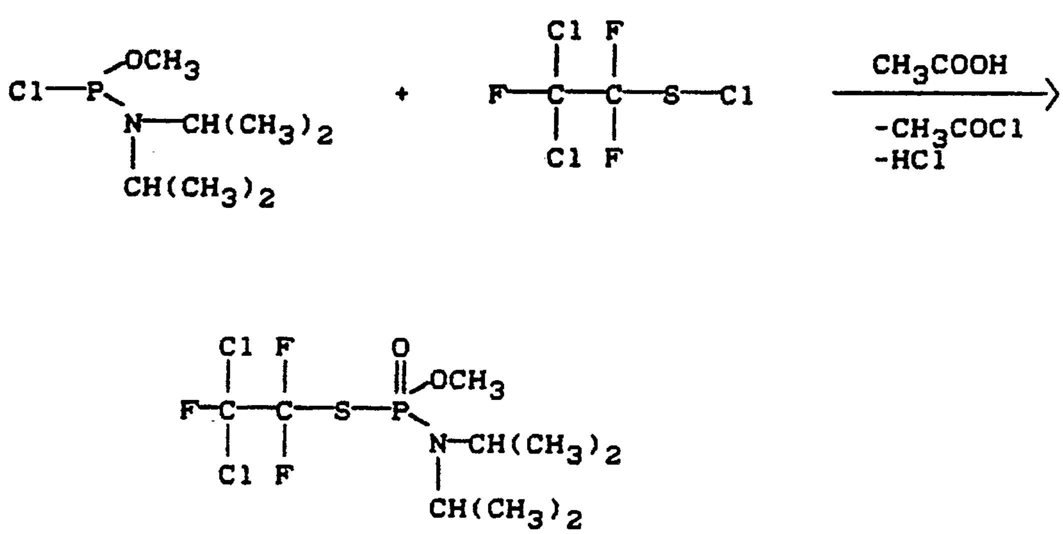


Verwendet man als Ausgangsstoffe beispielsweise 1,1-Difluorethen, s-Butylthiol, Ethanol und Phosphor-(V)sulfid ($P_4S_{10}$), so läßt sich der Reaktionsablauf der erfindungsgemäßen Verfahrensvariante (C) durch das

folgende Formelschema darstellen:

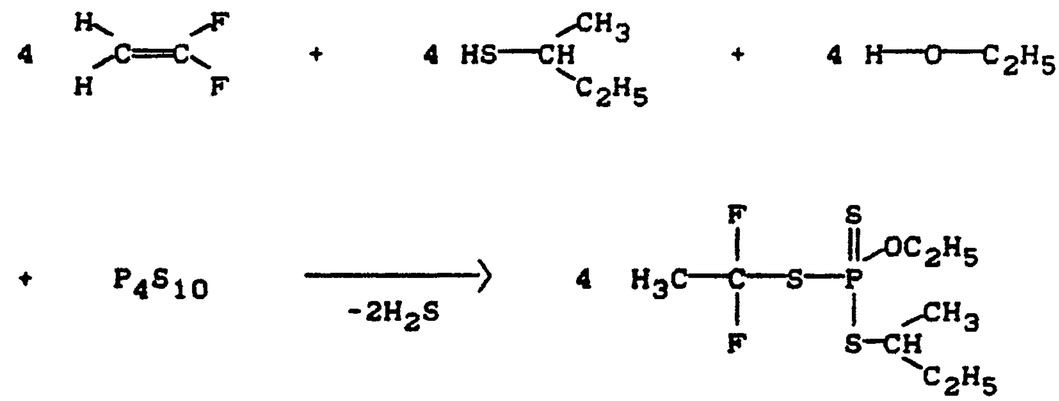


Verwendet man als Ausgangsstoffe beispielsweise O-Ethyl-S-s-butyl-S-(1,1-difluorethyl)-dithiophosphorsäuretriester und 2,4-Bis-(4-methoxyphenyl)-2,4-dithioxo-1,3,2,4-dithiadiphosphetan-2,4-disulfid (Lawesson's Reagenz), so läßt sich der Reaktionsablauf der erfindungsgemäßen Verfahrensvariante (D) durch das folgende Formelschema darstellen:

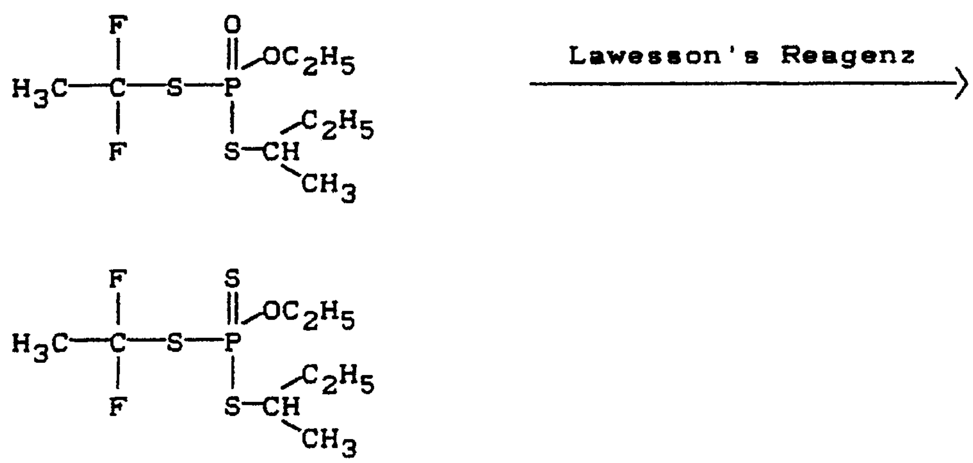


Die beim erfindungsgemäßen Verfahren (A) als Ausgangsstoffe zu verwendenden (Thio)phosphorig-(phosphonig)säure(amid)ester der Formel (II) sind bekannt und/oder lassen sich nach allgemein bekannten Verfahren herstellen (vgl. z. B. Houben-Weyl 12/2 , 89).

Die bei den erfindungsgemäßen Verfahren (A) (Variante (a)) und (B) als Ausgangsstoffe zu verwendenden 1-Fluoralkylsulfenylhalogenide der Formel (III) sind bekannt (vgl. Izv. Akad. Nauk SSSR, Ser. Khim. 5 , 1123-30 (1982); Izv. Akad. Nauk SSSR, Ser. Khim. 10 , 2358-60 (1987)), oder können hergestellt werden, indem man O,O-Diethyl-S-(1,1-difluorethyl)dithiophosphorsäure triester bei Temperaturen zwischen -5 °C und +10 °C mit Sulfurylchlorid umsetzt und destillativ aufarbeitet.

Die beim erfindungsgemäßen Verfahren (A) (Variante (b)) als Ausgangsstoffe zu verwendenden Bis(1-Fluoralkyl)disulfane der Formel (IV) sind bekannt und/oder können nach allgemein bekannten Verfahren hergestellt werden (vergleiche z. B. Houben-Weyl 5/3 , 856; J. org. Chem. 36 , 3991 (1969)).

Die beim erfindungsgemäßen Verfahren (B) außerdem als Ausgangsstoffe zu verwendenden (Thio)-phosphorig(phosphonig)säure(amid)esterhalogenide der Formel (V) sind bekannt und/oder können nach allgemein bekannten Verfahren hergestellt werden (vergleiche z. B. Houben-Weyl 12/2 , 98).

Die erfindungsgemäß als Ausgangsstoffe zu verwendenden Verbindungen der Formeln (VI) bis (VIII) sind allgemein bekannte Verbindungen bzw. können nach allgemein üblichen Methoden erhalten werden.

Das erfindungsgemäße Verfahren (B) wird vorzugsweise unter Verwendung von Reaktionshilfsstoffen durchgeführt. Als solche kommen beispielsweise Schwefeldioxid oder Carbonsäuren in Frage. Vorzugsweise verwendet man Carbonsäuren, wie beispielsweise Essigsäure.

Die erfindungsgemäßen Verfahren (A) (Variante (a) und (b)) und (B) werden vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolethier, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether.

Die Reaktionstemperaturen können bei den erfindungsgemäßen Verfahren (A) (Variante (a) und (b)) und (B) in einem größeren Bereich variiert werden. Im allgemeinen arbeitet man bei Temperaturen zwischen -80° C und +50° C, vorzugsweise bei Temperaturen zwischen -80° C und +30° C.

Zur Durchführung der erfindungsgemäßen Verfahren (A) (Variante (a) und (b)) und (B) werden die jeweils benötigten Ausgangsstoffe im allgemeinen in angenähert äquimolaren Mengen eingesetzt. Es ist jedoch auch möglich, eine der beiden Komponenten in einem größeren Überschuß zu verwenden.
Die Reaktionsdurchführung erfolgt im allgemeinen bei Normaldruck, die Aufarbeitung erfolgt destillativ.

Das erfindungsgemäße Verfahren (C) wird vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise all die Verdünnungsmittel, die bereits bei den Verfahren (A) und (B) genannt wurden.

Die Reaktionstemperaturen können bei dem erfindungsgemäßen Verfahren (C) in einem größeren Bereich variiert werden. Im allgemeinen arbeitet man bei Temperaturen zwischen 0° C und 200° C, vorzugsweise bei Temperaturen zwischen 80° C und 150° C.

Zur Durchführung des erfindungsgemäßen Verfahrens (C) setzt man pro Mol an Fluoralken der Formel (VI) im allgemeinen 0,1 bis 1,0 Mol, vorzugsweise 0,3 bis 0,7 Mol an Thiol der Formel (VII) sowie im allgemeinen 0,1 bis 1,0 Mol, vorzugsweise 0,3 bis 0,7 Mol an Alkohol der Formel (VIII) und im allgemeinen 0,025 bis 0,25 Mol, vorzugsweise 0,075 bis 0,175 Mol an Phosphor(V)sulfid $P_4S_{10}$) ein.

Die Reaktionsdurchführung erfolgt im allgemeinen bei erhöhtem Druck von 1,1 bis 200 bar, vorzugsweise bei 10 bis 100 bar. Die Aufarbeitung des Reaktionsgemisches erfolgt nach allgemein üblichen Methoden unter anderem chromatographisch.

Als Verdünnungsmittel zur Durchführung des erfindungsgemäßen Verfahrens (D) kommen inerte organische Lösungsmittel infrage. Hierzu gehören insbesondere aliphati sche, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff, Ether, wie Diethylether, Dioxan, Tetrahydrofuran oder Ethylenglykoldimethyl- oder -diethylether.

Die Reaktionstemperatur kann bei der Durchführung des erfindungsgemäßen Verfahrens (D) in einem größeren Bereich variiert werden. Im allgemeinen arbeitet man bei Temperaturen zwischen 0° C und 180° C, vorzugsweise bei Temperaturen zwischen 20° C und 150° C.

Zur Durchführung des erfindungsgemäßen Verfahrens (D) setzt man pro Mol an Verbindung der Formel (I) im allgemeinen und vorzugsweise 0,5 Mol an 2,4-Bis-(4-methoxyphenyl)2,4-dithioxo-1,3,2,4-dithiadiphosphetan (Lawesson's Reagenz) ein.

Die Reaktionsdurchführung, Aufarbeitung und Isolierung der Reaktionsprodukte erfolgt in Analogie zu bekannten Verfahren (vergleiche z. B. Bull. Soc. Chim. Belg. 87 , 223-228 [1978]).

Zur Aufarbeitung wendet man die üblichen Trennmethoden (Chromatographie, Kristallisation) an.

Einige der neuen Verbindungen fallen in Form von Ölen an, die sich teilweise nicht unzersetzt destillieren lassen, jedoch durch sogenanntes "Andestillieren", d. h. durch längeres Erhitzen unter vermindertem Druck auf mäßig erhöhte Temperatur von den letzten flüchtigen Anteilen befreit und auf diese Weise gereinigt werden können. Zu ihrer Charakterisierung dient der Retentionsindex (Kovats-Index).

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae,

Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyp pobosca spp., Stomoxys spp., Oestrus spp., Hypoderma spp., Tabanus spp., Tannia spp., Bibio hortulanus Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfindungsgemäßen Wirkstoffe der Formel (I) zeichnen sich durch eine hervorragende insektizide Wirksamkeit aus. Sie zeigen insbesondere beim Einsatz als Bodeninsektizide eine hervorragende Wirkung gegen Maden wie z.B. Phorbia antiqua-Maden.

Die Verbindungen der Formel (I) können somit vorzugsweise als Pflanzenschutzmittel, insbesondere zur Bekämpfung von Bodeninsekten (Insekten, die in allen oder bestimmten Lebensstadien im oder auf dem Boden oder in Bodennähe an Pflanzen vorkommen) eingesetzt werden.

Darüber hinaus zeigen die erfindungsgemäßen Wirkstoffe auch eine blattinsektizide Wirkung.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesent lichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol- Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe der Formel (I) eignen sich auch zur Bekämpfung von Insekten, die im Zusammenhang mit der Zucht oder Haltung landwirtschaftlicher Nutztiere, wie z.B. Rinder, Schafe, Ziegen, Pferde, Schweine, Esel, Kaninchen, Hühner, Puten, Enten und Gänse, sonstiger Haustiere wie z.B. Hunde, Katzen oder Stubenvögel auftreten.

Durch die Bekämpfung dieser Insekten sollen vor allem Leistungsminderungen (bei Fleisch, Milch, Wolle, Häuten, Eiern usw.) vermieden werden, so daß durch den Einsatz der erfindungsgemäßen Wirkstoffe eine wirtschaftlichere und einfachere Tierhaltung möglich ist.

Die Anwendung der erfindungsgemäßen Wirkstoffe geschieht hierbei in bekannter Weise, beispielsweise in Form des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken,

Schwanzmarken, Gliedmaßenbändern, Halftern, Markierungsvorrichtungen usw.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe oder Feinstverkapselungen in polymeren Stoffen.

Vorzugsweise werden die Verbindungen der Formel (I) in den Bereichen Pflanzenschutz, Vorratsschutz und Materialschutz sowie im Hygienebereich zur Bekämpfung von Arthropoden in Räumen (wie Küchen, Gewerbebetrieben, Krankenhäusern usw.) eingesetzt. Besonders bevorzugt wird die Verwendung der Verbindungen der Formel (I) als Pflanzenschutzmittel.

Die Herstellung sowie die biologische Wirksamkeit der erfindungsgemäßen Verbindungen soll anhand der folgenden Beispiele erläutert werden. Raumtemperatur bedeutet in den Beispielen jeweils 18-20 °C.

Herstellungsbeispiele

Beispiel 1

(Verfahren (A), Variante (a))

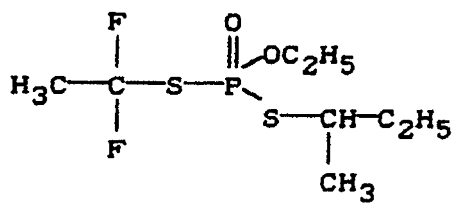

Zu einer Lösung aus 10,5 g (0,05 Mol) S-s-Butyl-O,O-diethyl-thiophosphorigsäuretriester in 50 ml Dichlormethan tropft man bei -78 °C eine Lösung aus 6,6 g (0,05 Mol) 1,1-Difluorethylsulfenylchlorid in 50 ml Dichlormethan. Anschließend wird 16 Stunden bei Raumtemperatur gerührt, das Lösungsmittel im Vakuum entfernt und der Rückstand am Kugelrohr destilliert.

Man erhält 5,5 g (39 % der Theorie) an O-Ethyl-S-s-butyl-S-(1,1-difluorethyl)dithiophosphorsäuretriester mit dem Siedepunkt 75 °C/1,3 mbar und dem Retentionsindex 1432.

Beispiel 2

(Verfahren (A), Variante (b))

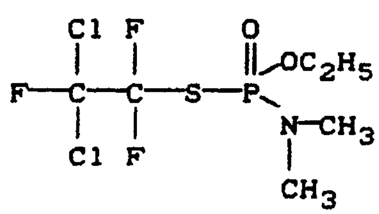

Zu einer Lösung aus 13,2 g (0,08 Mol) Phosphorigsäurediethyldiester-N-N-dimethylamid in 80 ml Dichlormethan tropft man bei -78 °C 29,6 g (0,08 Mol) Bis(2,2-dichlor-1,1,2-trifluor-ethan)disulfan, gelöst in 10 ml Dichlormethan, und rührt die Mischung 24 Stunden bei Raumtemperatur. Durch fraktionierte Destillation erhält man 4,1 g (18 % der Theorie) an O-Ethyl-S-(2,2-dichlor-1,1,2-trifluor-ethan)-thiophosphorsäurediester-N,N-dimethylamid mit dem Retentionsindex 1265.

Beispiel 3

(Verfahren (B))

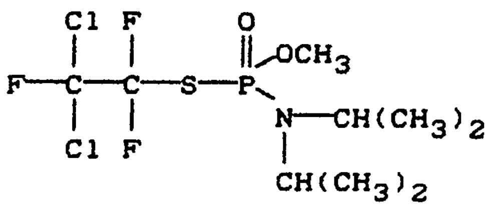

Zu einer Lösung aus 2,5 g (0,013 Mol) Phosphorigsäuremethylester-N,N-diisopropylamid-chlorid und 0,78 g (0,013 Mol) Essigsäure in 20 ml Dichlormethan tropft man bei -78° C eine Lösung aus 2,85 g (0,013 Mol) 2,2-Dichlor-1,1,2-trifluor-ethansulfenylchlorid in 5 ml Dichlormethan. Es wird 6 Stunden bei Raumtemperatur gerührt und das Produkt anschließend durch Säulenchromatographie an Kieselgel isoliert. Man erhält O-Methyl-S-(2,2-dichlor-1,1,2-trifluor-ethan)-thiophosphorsäurediester-N,N-diisopropylamid mit dem Retentionsindex 1620.

Beispiel 4

(Verfahren C)

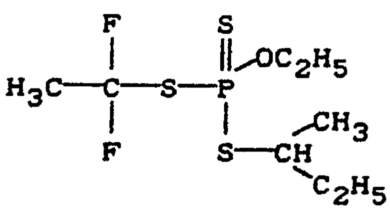

22,2 g (0,05 Mol) Phosphor(V)sulfid ($P_4S_{10}$) werden zusammen mit 9,2 g (0,2 Mol) Ethanol, 18,0 g (0,2 Mol) s-Butylthiol und 25,6 g (0,4 Mol) 1,1-Difluorethen in 200 ml Toluol gelöst und im Autoklaven 10 Stunden auf 110° C erhitzt. Anschließende Säulenchromatographie an Kieselgel mit Cyclohexan/Toluol (1:1) als Laufmittel ergibt O-Ethyl-S-s-butyl-S-(1,1-difluorethan)-trithiophosphorsäuretriester, mit dem Retentionsindex 1553.

Verfahren (D)

2,6 g (9,4 mMol) O-Ethyl-S-s-butyl-S-(1,1-difluorethan)-dithiophosphorsäuretriester und 1,9 g (4,7 mMol) 2,4-Bis-(4-methoxyphenyl )-2,4-dithioxo-1,3,2,4-dithiadiphosphetan werden in 50 ml Toluol 16 Stunden am Rückfluß erhitzt. Das Lösungsmittel wird unter vermindertem Druck abdestilliert und der Rückstand an Kieselgel mit Cyclohexan/Toluol (7:3) als Laufmittel chromatographiert. Man erhält 2,2 g (83 % der Theorie) O-Ethyl-S-s-butyl-S-(1,1-difluorethan)-trithiophosphorsäuretriester, mit dem Retentionsindex 1553.

In analoger Weise, unter Berücksichtigung der Angaben in der Beschreibung zu den erfindungsgemäßen Verfahren, werden die in der folgenden Tabelle 1 aufgeführten Verbindungen der Formel I

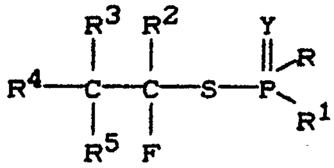

(I)

erhalten:

Tabelle 1

| Beisp. Nr. | R | $R^1$ | $R^2$ | $R^3$ | $R^4$ | $R^5$ | Y | Retentionsindex* |
|---|---|---|---|---|---|---|---|---|
| 5 | $-C_2H_5$ | $-SCH_3$ | F | H | H | H | S | 1379 |
| 6 | $-C_2H_5$ | 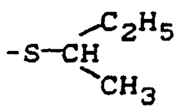 | F | H | H | H | S | 1560 |
| 7 | $-C_2H_5$ | $-S-CH_2-CH(CH_3)_2$ | F | H | H | H | S | 1556 |
| 8 | $-C_2H_5$ | $-S-(CH_2)_3-CH_3$ | F | H | H | H | S | 1590 |
| 9 | $-C_2H_5$ | $-S-(CH_2)_2-CH_3$ | F | H | H | H | S | 1507 |
| 10 | $-C_2H_5$ | $-S-CH(CH_3)_2$ | F | H | H | H | S | 1435 |
| 11 | $-OC_2H_5$ | $-N(C_2H_5)_2$ | F | F | Cl | H | O | 1458 |
| 12 | $-OC_2H_5$ | $-N(C_2H_5)_2$ | F | F | Cl | H | S | 1579 |
| 13 | $-OC_2H_5$ | $-N(C_2H_5)_2$ | F | F | Cl | Cl | O | 1585 |

<u>Tabelle 1</u> (Fortsetzung)

| Beisp. Nr. | R | $R^1$ | $R^2$ | $R^3$ | $R^4$ | $R^5$ | Y | Retentions-index* |
|---|---|---|---|---|---|---|---|---|
| 14 | $-OC_2H_5$ | $-N(C_2H_5)_2$ | F | F | Cl | Cl | S | 1669 |
| 15 | $-OC_2H_5$ | $-N(CH_3)_2$ | F | F | Cl | Cl | O | 1461 |
| 16 | $-OC_2H_5$ | $-N(C_2H_5)_2$ | F | H | H | H | O | 1327 |
| 17 | $-OC_2H_5$ | $-N(CH_3)_2$ | F | H | H | H | O | 1193 |
| 18 | $-OC_2H_5$ | 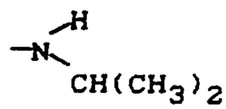 | F | H | H | H | O | 1289 |
| 19 | $-OC_2H_5$ | $-S(CH_2)_2CH_3$ | F | H | H | H | O | 1401 |
| 20 | $-OC_2H_5$ | $-N(CH_3)_2$ | F | H | H | H | S | 1306 |
| 21 | $-OC_2H_5$ | $-S-(CH_2)_2-CH_3$ | F | H | H | H | S | 1526 |
| 22 | $-OC_2H_5$ | 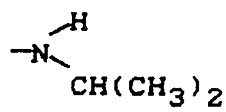 | F | H | H | H | S | 1365 |
| 23 | $-OC_2H_5$ | $-S-(CH_2)_2CH_3$ | F | Cl | H | H | O | 1641 |
| 24 | $-OC_2H_5$ | 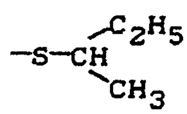 | F | F | Cl | H | O | 1556 |

* Die Retentionsindices (Kovats-Index) wurden gaschromatographisch auf einer Siedepunktphase (Dimethylsilicon) ermittelt.

<u>Verwendungsbeispiele</u>

In dem nachfolgenden Verwendungsbeispiel A wurde die nachstehend angegebene Verbindung als Vergleichssubstanz eingesetzt:

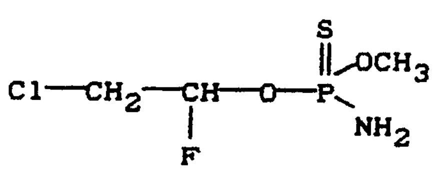 (A)

(bekannt aus DE-OS 26 29 016, welcher die US-PS 4 159 324 entspricht).

Beispiel A

Grenzkonzentrations-Test / Bodeninsekten

Testinsekt: Phorbia antiqua-Maden (im Boden)
Lösungsmittel: 3 Gewichtsteile Aceto
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z. B. die Verbindungen der Herstellungsbeispiele 1, 4, 6, 7, 16, 17, 18, 20 und 21 bei einer beispielhaften Konzentration von 20 ppm einen Wirkungsgrad von 100 %, während die Vergleichssubstanz bei der gleichen Konzentration nur 0 % ergab.

Beispiel B

Test mit Lucilia cuprina resistent-Larven

Emulgator: 35 Gew.-Teile Ethylenglykolmonomethylether
35 Gew.-Teile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemischs und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigten bei einer beispielhaften Konzentration von 1000 ppm z.B. die Verbindungen der Herstellungsbeispiele 1, 4, 5, 6, 13, 17, 20, 21, 22 einen Abtötungsgrad von 100 %.

Beispiel C

Test mit Fliegen, Kornkäfer, Schaben

Testobjekte: Adulte ♂♂ ♀♀ Musca domestica, Sitophilus granarius, Blattella germanica.

Testverfahren: Filterpapierscheiben (ø 9 cm) werden in Plastikschalen mit je 2,0 ml der jeweils gewünschten Konzentration der Testsubstanz imprägniert.

Nach Trocknung der Filter werden die Schalen verschlossen und 24 Stunden nach Ansatz mit $CO_2$-betäubten Arthropoden beschickt.

Insektenanzahl: Musca domestica 10, Sitophilus granarius 10, Blattella germanica 5

Die Registrierung der Wirkung erfolgt zu bestimmten Zeiten nach Aufsetzen der Arthropoden (5-360 Minuten bzw. 1-7 Tage p.a. nach Aufsetzen der Arthrcpoden)

Testkriterium: Als Kriterium für den Eintritt der Wirkung gilt das Erreichen des sog. adynamische Stadiums (keine Lebenszeichen) der Testarthropoden.

Bewertung: 100 % Wirkung = alle Arthropoden tot, bzw. in adynamischem Stadium,
0 % Wirkung = keine Arthropoden tot, bzw. im adynamischen Stadium.

Bei einer beispielhaften Konzentration von 1000 ppm ergab sich eine 100 % Wirkung z.B. bei den

folgenden Herstellungsbeispielen:

a) Lucilia cuprina: 1,4,5,6,13,17,20,21 und 22
b) Blatella germanica: 4,6,9,10,13 und 22
c) Sitophilus granarius: 4,6 und 22
d) Musca domestica: 4,6 und 22

## Ansprüche

1. S-Halogenalkyl(di)(tri)(thio)phosphor(phosphon)säure(amid)ester der allgemienen Formel

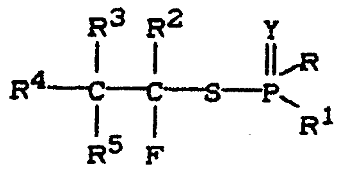

(I)

in welcher
R für gegebenenfalls substituiertes Alkyl oder Alkenyl oder für einen Rest $-OR^6$ steht, worin
$R^5$ für jeweils gegebenenfalls substituiertes Alkyl, Alkenyl oder Alkinyl steht,
$R^1$ für einen Rest $-SR^7$ oder einen Rest

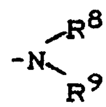

steht worin
$R^7$ für jeweils gegebenenfalls substituiertes Alkyl, Cycloalkyl, Alkenyl oder Alkinyl steht und
$R^8$ und $R^9$ gleich oder verschieden sind und unabhängig voneinander für Wasserstoff oder für gegebenenfalls substituierte Reste aus der Reihe Alkyl, Cycloalkyl, Alkenyl oder Alkinyl stehen oder
gemeinsam mit dem Stickstoffatom, an welches sie gebunden sind einen fünf- bis siebengliedrigen, gesättigten oder ungesättigten Ring bilden,
$R^2$, $R^3$, $R^4$ und $R^5$ unabhängig voneinander für Wasserstoff, Halogen oder Alkyl stehen und
Y für Sauerstoff oder Schwefel steht.

2. S-Halogen(di)(tri)(thio)phosphor(phosphon)säure(amid)ester der Formel (I), in welchen
R für jeweils gegebenenfalls durch Halogen und/oder $C_1$-$C_4$ Alkoxy substituiertes Alkyl mit 1 bis 6 Kohlenstoffatomen oder Alkenyl mit 2 bis 6 Kohlenstoffatomen oder für einen Rest $-OR^6$ steht, worin
$R^6$ für jeweils gegebenenfalls durch Halogen und/oder $C_1$-$C_4$-Alkoxy substituiertes Alkyl mit 1 bis 6 Kohlenstoffatomen, Alkenyl mit 2 bis 6 Kohlenstoffatomen oder Alkinyl mit 2 bis 6 Kohlenstoffatomen steht,
$R^1$ für einen Rest $-SR^7$ oder einen Rest

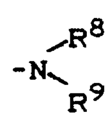

steht,
worin
$R^7$ für jeweils gegebenenfalls durch Halogen und/oder $C_1$-$C_4$-Alkoxy substituiertes Alkyl mit 1 bis 6 Kohlenstoffatomen, Alkenyl mit 2 bis 6 Kohlenstofatomen oder Alkinyl mit 2 bis 6 Kohlenstoffatomen oder für gegebenenfalls durch Methyl, Ethyl, Fluor und/oder Chlor substituiertes Cycloalkyl mit 3 bis 8 Kohlenstoffatomen steht und
$R^8$ und $R^9$ gleich oder verschieden sind und unabhängig voneinander für Wasserstoff, für gegebenenfalls durch Halogen und/oder $C_1$-$C_4$-Alkoxy substituiertes Alkyl mit 1 bis 4 Kohlenstoffatomen; für gegebenenfalls durch Methyl, Ethyl, Fluor und/oder Chlor substituiertes Cycloalkyl mit 3 bis 8 Kohlenstoffatomen; für jeweils gegebenenfalls durch Halogen und/oder $C_1$-$C_4$-Alkoxy substituiertes Alkenyl mit 2 bis 6 Kohlenstoffatomen oder Alkinyl mit 2 bis 6 Kohlenstoffatomen stehen,

oder
gemeinsam mit dem Stickstoffatom, an welches sie gebunden sind einen 5- bis 6-gliedrigen, gesättigten oder ungesättigten Ring bilden,
$R^2$, $R^3$, $R^4$ und $R^5$ unabhängig voneinander für Wasserstoff, Fluor, Chlor, Brom oder Alkyl mit 1 bis 6 Kohlenstoffatomen stehen und
Y für Sauerstoff oder Schwefel steht.
3. S-Halogenalkyl(di)(tri)(thio)phosphor(phosphon)säure(amid)ester der Formel (I),
in welchen
R für jeweils gegebenenfalls durch Fluor, Chlor, Methoxy und/oder Ethoxy substituiertes Alkyl mit 1 bis 4 Kohlenstoffatomen oder Alkenyl mit 2 bis 4 Kohlenstoffatomen oder für einen Rest $-OR^6$ steht, worin
$R^6$ für jeweils gegebenenfalls durch Fluor, Chlor, Methoxy und/oder Ethoxy substituiertes Alkyl mit 1 bis 4 Kohlenstoffatomen, Alkenyl mit 2 bis 4 Kohlenstoffatomen oder Alkinyl mit 2 bis 4 Kohlenstoffatomen steht,
$R^1$ für einen Rest $-SR^7$ oder einen Rest

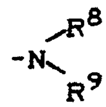

steht,
worin
$R^7$ für jeweils gegebenenfalls durch Fluor, Chlor, Methoxy und/oder Ethoxy substituiertes Alkyl mit 1 bis 4 Kohlenstoffatomen, Alkenyl mit 2 bis 4 Kohlenstoffatomen, Alkinyl mit 2 bis 4 Kohlenstoffatomen oder für gegebenenfalls durch Methyl, Ethyl, Fluor und/cder Chlor substituiertes Cycloalkyl mit 3 bis 6 Kohlenstoffatomen steht und
$R^8$ und $R^9$ gleich oder verschieden sind und unabhängig voneinander für Wasserstoff, für gegebenenfalls durch Fluor, Chlor, Methoxy und/oder Ethoxy substituiertes Alkyl mit 1 bis 4 Kohlenstoffatomen; für gegebenenfalls durch Methyl, Ethyl, Fluor und/oder Chlor substituiertes Cycloalkyl mit 3 bis 6 Kohlenstoffatomen; für jeweils gegebenenfalls durch Fluor, Chlor, Methoxy und/oder Ethoxy substituiertes Alkenyl mit 2 bis 4 Kohlenstoffatomen oder Alkinyl mit 2 bis 4 Kohlenstoffatomen stehen oder
gemeinsam mit dem Stickstoffatom, an welches sie gebunden sind für Piperidyl oder Pyrrolidinyl stehen,
$R^2$, $R^3$, $R^4$ und $R^5$ unabhängig voneinander für Wasserstoff, Fluor, Chlor, Brom oder Alkyl mit 1 bis 4 Kohlenstoffatomen stehen und
Y für Sauerstoff oder Schwefel steht.
4. S-Halogenalkyl(di)(tri)(thio)phosphor(phosphon)säure(amid)ester der Formel (I),
in welchen
R für Methyl, Ethyl, n-Propyl, s-Propyl oder i-Propyl oder für einen Rest $-OR^6$ steht, worin
$R^6$ für Methyl, Ethyl, n-Propyl, i-Propyl oder Chlorethyl steht,
$R^1$ für einen Rest $-SR^7$ oder einen Rest

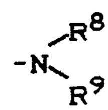

steht,
worin
$R^7$ für Methyl, Ethyl, n-Propyl, i-Propyl, n-Butyl, s-Butyl, i-Butyl oder t-Butyl steht,
$R^8$ für Wasserstoff, Methyl, Ethyl, n-Propyl oder i-Propyl steht und
$R^9$ für Methyl, Ethyl, n- oder i-Propyl, i-Butyl oder a-Butyl oder Allyl steht,
$R^2$ für Wasserstoff, Fluor, Chlor, Methyl oder Ethyl,
$R^3$ für Wasserstoff, Fluor, Chlor, Methyl oder Ethyl,
$R^4$ für Wasserstoff, Fluor oder Chlor und
$R^5$ für Wasserstoff, Fluor oder Chlor steht und
Y für Sauerstoff oder Schwefel steht.
5. Verbindungen der Formel (I) gemäß den Ansprüchen 1 bis 4, in welchen $R^2$ für Fluor steht.
6. Verfahren zur Herstellung von S-Halogenalkyl(di)-(tri)(thio)phosphor(phosphon)säure(amid)-estern der allgemeinen Formel

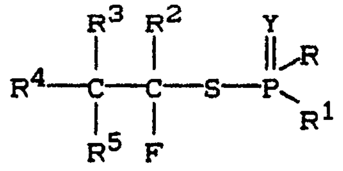

(I)

in welcher

R für gegebenenfalls substituiertes Alkyl oder Alkenyl oder für einen Rest $-OR^6$ steht, worin

$R^6$ für jeweils gegebenenfalls substituiertes Alkyl, Alkenyl oder Alkinyl steht,

$R^1$ für einen Rest $-SR^7$ oder einen Rest

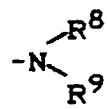

steht worin

$R^7$ für jeweils gegebenenfalls substituiertes Alkyl, Cycloalkyl, Alkenyl oder Alkinyl steht und

$R^8$ und $R^9$ gleich oder verschieden sind und unabhängig voneinander für Wasserstoff oder für gegebenenfalls substituierte Reste aus der Reihe Alkyl, Cycloalkyl, Alkenyl oder Alkinyl stehen oder gemeinsam mit dem Stickstoffatom, an welches sie gebunden sind einen fünf- bis siebengliedrigen, gesättigten oder ungesättigten Ring bilden,

$R^2$, $R^3$, $R^4$ und $R^5$ unabhängig voneinander für Wasserstoff, Halogen oder Alkyl stehen und

Y für Sauerstoff oder Schwefel steht,

dadurch gekennzeichnet, daß man

A) (Thio)phosphorig(phosphonig)säure(amid)ester der allgemeinen Formel (II)

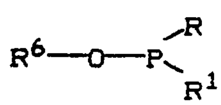

(II)

in welcher

R, $R^1$ und $R^6$ die oben angegebene Bedeutung haben,

entweder

a) mit 1-Fluoralkylsulfenylhalogeniden der Formel (III)

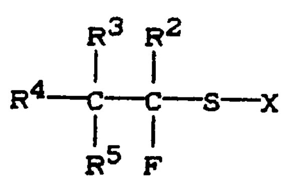

(III)

in welcher

$R^2$, $R^3$, $R^4$ und $R^5$ die oben angegebene Bedeutung haben und

X für Halogen, insbesondere Chlor, steht, oder

b) mit Bis(1-Fluoralkyl)disulfanen der Formel (IV)

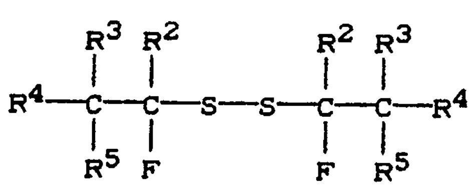

(IV)

in welcher

$R^2$, $R^3$, $R^4$ und $R^5$ die oben angegebene Bedeutung haben,

gegebenenfalls in Gegenwart eines Verdünnungsmittels umsetzt,
oder
B) 1-Fluoralkylsulfenylhalogenide der Formel (III)

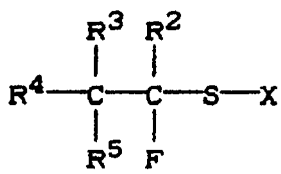

(III)

in welcher
$R^2$, $R^3$, $R^4$, $R^5$ und X die oben angegebene Bedeutung haben,
mit (Thio)phosphorig(phosphonig)säure(amid)esterhalogeniden der Formel (V)

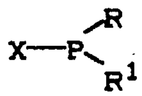

(V)

in welcher
R, $R^1$ und X die oben angegebene Bedeutung haben,
gegebenenfalls in Gegenwart eines Verdünnungsmittels und gegebenenfalls in Gegenwart eines Reaktionshilfsmittels umsetzt,
oder
C) zur Herstellung der Verbindungen der Formel I, in welcher Y für Schwefel, R für $OR^6$ und $R^1$ für $SR^7$ stehen,
Fluoralkene der Formel (VI)

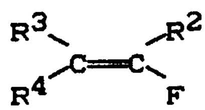

(VI)

in welcher
$R^2$, $R^3$ und $R^4$ die oben angegebene Bedeutung haben,
mit Thiolen der Formel (VII),
$H\text{-}S\text{-}R^7$ (VII)
in welcher
$R^7$ die oben angegebene Bedeutung hat,
und mit Alkoholen der Formel (VIII),
$H\text{-}O\text{-}R^6$ (VIII)
in welcher
$R^6$ die oben angegebene Bedeutung hat, und mit Phosphor(V)sulfid ($P_4S_{10}$) gegebenenfalls in Gegenwart eines Verdünnungsmittels umsetzt, und
gegebenenfalls die gemäß (A) und (B) erhaltenen Verbindungen der Formel (I),
in welcher
Y für Sauerstoff steht, durch Umsetzung mit einem Schwefelungsreagenz, wie beispielsweise 2,4-Bis-(4-methoxyphenyl)-2,4-di- thioxo-1,3,2,4-dithiadiphosphetan (Lawesson's Reagenz), in die entsprechenden Verbindungen, in welchen Y für Schwefel steht, überführt.

7. Schädlingsbekämpfungsmittel, gekennzeichnet durch einen Gehalt an mindestens einer Verbindung der Formel (I), gemäß den Ansprüchen 1 oder 6.

8. Verwendung von Verbindungen der Formel (I) gemäß den Ansprüchen 1 oder 6 zur Bekämpfung von Schädlingen.

9. Verfahren zur Bekämpfung von Schädlingen, dadurch gekennzeichnet, daß man Verbindungen der Formel (I) gemäß den Ansprüchen 1 oder 6 auf Schädlinge und/oder ihren Lebensraum einwirken läßt.

10. Verfahren zur Herstellung von Schädlingsbekämpfungsmitteln, dadurch gekennzeichnet, daß man Verbindungen der Formel (I) gemäß den Ansprüchen 1 oder 6 mit Streckmitteln und/oder oberflächenaktiven Mitteln vermischt.